# EUROPEAN PATENT APPLICATION

(11) **EP 4 590 006 A1**
(43) Date of publication of application: **23.07.2025**
(21) Application number: 24152702.7
(22) Date of filing: 18.01.2024
(51) Int. Cl.: H04W 12/0431, G06F 21/71, H04W 12/041, H04W 12/06, H04L 9/40

(54) **ENHANCED GENERIC BOOTSTRAPPING ARCHITECTURE**

(71) Applicant: DABCO Limited, Newbury Berkshire RG14 2FN (GB)
(72) Inventor: AHMED, Shifeeq, London, W2 6BY (GB); TAHIR, Mohammad Awais, London, W2 6BY (GB)
(74) Representative: Boult Wade Tennant LLP

(57) **Abstract**

Telecommunications system and method comprising a bootstrapping server function, BSF, within a network domain. A telecommunications roaming hub within a telecommunications network external to the network domain. A first communications interface between the BSF and the telecommunications roaming hub, wherein the BSF is configured to provided generic bootstrapping architecture, GBA, services to one or more user equipment, UE, operating within telecommunications networks external to the network domain.

## Description

### Field of the Invention

The present invention relates to a system and method for providing enhanced generic bootstrapping architecture (GBA) services, and especially providing GBA services to user equipment (UE), for example when roaming.

### Background of the Invention

UICCs (e.g., SIMs, USIMs, eSIMs or iSIMs) enable a mobile device or user equipment (UE) to securely communicate with entities, such as telecommunication networks and other service providers. However, it is not always possible or desirable to provision the UICCs with cryptographic material to enable secure communications with every entity that the UE will interact with during its lifetime. Furthermore, new service providers may commence operation after a UE has been deployed. The generic bootstrapping architecture (GBA) defined by 3GPP, enables the UE to use a bootstrapping server function (BSF) to establish a secret between the UE and one or more data service providers (network application function (NAF)). The shared secret may then be used by the UE and the NAF to establish secure communication.

GBA uses 3GPP authentication infrastructure, including the 3GPP Authentication Centre (AuC), the UICC, and the 3GPP AKA protocol that runs between them. Therefore, GBA provides "bootstrapping of application security" to authenticate the subscriber (owner of the UE). GBA is described in more detail in 3GPP ETSI TS 133 220 V16.4.0 (2021-08).

GBA is a standard which enables a shared secret to be derived (bootstrapped) from the existing security association between a mobile network and a SIM card (UICC). This involves a network element called a Bootstrapping Server Function (BSF). In other words, GBA leverages the security of a SIM card (UICC) to authenticate mobile equipment, and then derive key material for general-purpose applications.

GBA may be advantageously used to provide high-security to the communications between a client and a server. This allows remotely managing, controlling and, in general, communicating with a device in a high security manner. In particular, GBA (or a GBA-like architecture) is used to enable secure communications with the device (UE). This communication may be between a server and a client, the client can be associated with the device. This communication is used to manage the device and/or services provided by (or via) the device, which enables secure management of that device and/or the services provided by (or via) the device. In this way, the device and/or the services provided by (or via) the device can be safely, securely and efficiently managed in a remote manner.

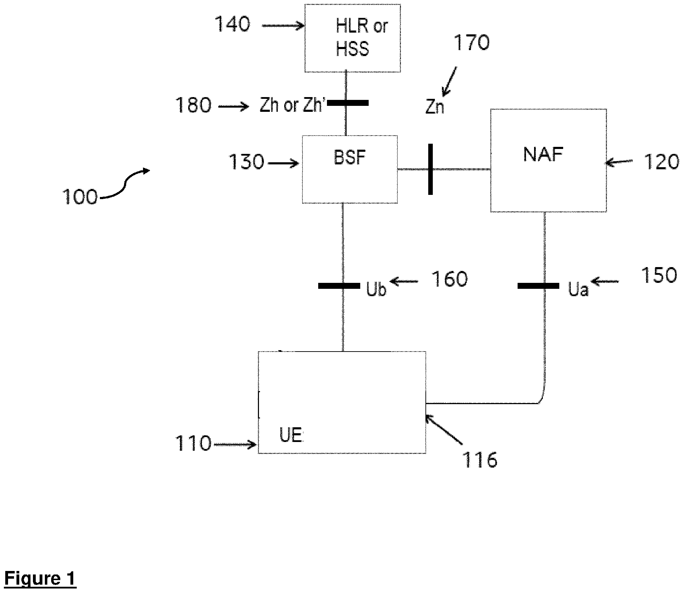

In particular, with reference to GBA, 3GPP Specification TS 33.220 defines the components and interfaces that are shown in Figure 1. These are further described as:
NAF 120, the Network Application Function is a server-side component of an application that will be secured using GBA.

BSF, Bootstrapping Server Function, 130 is a server-side component, which obtains authentication vectors from the HLR/HSS 140, and sends a challenge to the mobile device, UE, 110 during the GBA protocol. On successful authentication, it derives the shared secret.

HLR/HSS 140, the Home Location Register or Home Subscriber System, is the existing 3GPP system that stores subscription details and credentials (the K and IMSI) for each SIM card (UICC) issued by a mobile operator. It may be GBA-aware (so that it stores details for a GBA user subscription) or may be a legacy component.

UE, the User Equipment, 110 is a mobile device containing a SIM card (UICC). The UE 110 supports a client application that communicates with the NAF 120, as well as a service that interfaces to the UICC, communicates with the BSF 130, and derives the shared secret before passing it to the client application. This service is called a GAA Server in TR 33.905 (entitled "Recommendations for Trusted Open Platforms").

Ua 150 is the interface between the Mobile Device (UE) 110 and the Network Application Function (NAF) 120.

Ub 160 is the interface between the Mobile Device (UE) 110 and the Bootstrapping Server Function (BSF) 130. This is specified in detail in TS 24.109 (entitled "Bootstrapping interface (Ub) 160 and network application function interface (Ua) 150; Protocol details", it can currently be retrieved at http://www.3gpp.org/ftp/Specs/html-info/24109.htm).

Zh/Zh' 180 is the interface between the BSF 130 and the HSS or HLR 140. The Zh 180 interface is used with an HSS 140 that is "GBA Aware". The Zh' 180 interface is used with a legacy HLR or HSS 140. The Zh and Zh' 180 interfaces are specified in detail in TS 29.109 (entitled "Generic Authentication Architecture (GAA); Zh and Zn Interfaces based on Diameter protocol; Stage 3", and can be retrieved at
http://www.3gpp.org/ftp/Specs/html-info/29109.htm) and TS 29.229 (entitled "Cx and Dx interfaces based on the Diameter protocol; protocol details", it can currently be retrieved at http://www.3gpp.org/ftp/Specs/html-info/29229.htm).

Zn 170 is the interface between the NAF 120 and the BSF 130: this can use either a Web Services protocol (SOAP over http) or the Diameter protocol (RFC 3588). This is specified in detail in TS 29.109 (see above).

If the UICC does not belong to the telecommunications network of the NAF or the BSF (e.g., the UE is roaming on the telecommunications network) a process of inter-operator GBA is used. An example of this process is described at Annex K of 3GPP ETSI TS 133 220 V16.4.0 (2021-08). This process requires every home network to set up its own BSF for its own UEs to use. A NAF can detect the home network and the BSF of the UE from the B-TID of the UE. Zn-Proxy implementation is required for interworking with other operators. Therefore, point to point interfaces (full-mesh) are required between Zn-Proxy from multiple operators.

If the Zn-Proxy and the foreign BSF are separate entities, the foreign NAF inspects the B-TID to discover whether the subscriber belongs to its own network, or whether it is a visiting subscriber. In the former case, the request for the Ks_NAF is sent to the BSF, in the latter case, the request is sent to the Zn-Proxy. If the Zn-Proxy and the foreign BSF are a co-located entity, the NAF sends the request for the Ks_NAF to this co-located entity. The NAF does not need to inspect the B-TID. GBA flow only works if the serving network has a BSF and a Zn proxy implemented.

Each network operator sets up its own BSF, which enables bootstrapping sessions for its own (non-roaming) subscribers only. The NAF is able to detect the home network and the BSF of the UE from a bootstrapping transaction identifier (B-TID) of the UE. The Zn-Proxy implementation is required for communication with other telecommunication operators. Point to point (full-mesh) interfaces are required between Zn-Proxy from multiple operators. If the Zn-Proxy and a foreign BSF are separate entities, the foreign NAF inspects the B-TID to discover whether the subscriber belongs to its own network, or whether it is a visiting subscriber. In the former case, the request for a Ks_NAF is sent to the BSF, in the latter case, the request is sent to the Zn-Proxy. If the Zn-Proxy and the foreign BSF are a co-located entity, the NAF sends the request for the Ks_NAF to this co-located entity. The NAF does not need to inspect the B-TID.

The GBA process only works if the "serving network" has a BSF with an implemented Zn proxy. This requires advanced agreement between different telecommunications networks, which increases complexity and costs and is not always feasible. Therefore, there may be some UEs on a telecommunications network (roaming or non-roaming) that are not able to take advantage of GBA services and so other less convenient secure provisioning must be used to access certain data services, which may not be possible.

Therefore, there is required a method and system that overcomes these problems.

### Summary of the Invention

GBA usually requires that both the BSF and any one or more NAFs to reside in a home network. However, if the UICC of a UE does not belong to the home network of the NAF or the BSF then a process known as inter-operator GBA can be followed, as described previously. This adds complexity and can be cumbersome to set up.

A more convenient and efficient system is described that makes use of a separate BSF located within a network that is not necessarily associated with any home network (e.g., a network-independent BSF) or associated with a network but available to any UE. When a telecommunications network operator encounters a UE requiring GBA services that it cannot provide (either because it does not have a BSF at all or when the UE is roaming onto its network) then the telecommunications network operator passes the request to a roaming hub that is not limited to a single operator. The roaming hub has one or more interfaces (e.g., Zh) that are used for communications between the roaming hub and the separate or network-independent BSF. This can be a roaming hub used by different operators to provide roaming functionality (e.g., the Vodafone Roaming Service) or a separate roaming hub. Therefore, the network-independent BSF can communicate and route requests with a large number of HSSs or HLRs. Furthermore, each network operator does not need to set up separate agreements with the many different networks (HSSs or HLRs) as GBA services can instead use the network-independent BSF to do so. This simplifies set up and maintenance.

Against this background and in accordance with a first aspect there is provided a telecommunications system comprising:
a bootstrapping server function (BSF) within a network domain;
a telecommunications roaming hub within a telecommunications network external to the network domain; and
a first communications interface between the BSF and the telecommunications roaming hub, wherein the BSF is configured to provided generic bootstrapping architecture, GBA, services to one or more user equipment (UE) operating within telecommunications networks external to the network domain. Therefore, GBA services can be provided without requiring each network to have its own BSF or its own dedicated GBA interface with a BSF of another network.

Preferably, the telecommunications roaming hub may be configured to route a request and response between the BSF and a home subscriber server (HSS) or a home location register (HLR) the BSF further configured to use the response from the HSS or the HLR to authenticate the one or more UE that requests GBA services from the BSF. Therefore, authentication of the UE can use existing telecommunication infrastructure.

Optionally, the request may be routed based on an identifier of the one or more UE. For example, the B-TID or IMSI may be used.

Optionally, the GBA services provided to the one or more UE by the BSF provide one or more session keys to the UE. Other key material may be provided. The session keys may be derived from cryptographic material shared between the UE and BSF. Similar cryptographic material may be shared with the application function, server or NAF for derivation of similar session keys to facilitate secure communication between the NAF and the UE and/ or for signing or encrypting messages, for example.

Optionally, the telecommunications may further comprise one or more application function or network application function (NAF) within the network domain of the BSF or external to the network domain of the BSF, the one or more application function or NAF configured to provide data services to the one or more UE using:
communications secured using the one or more session keys provided by the BSF using the GBA services; and/or
data encrypted and/or signed using the more or more session keys provided by the BSF using the GBA services. The application function or NAF may be a server or application server or other entity providing services to the UE. The keys are those generated by making use of the roaming hub process described above.

In accordance with a second aspect, there is provided a method for providing generic bootstrapping architecture, GBA, services to one or more user equipment, UE, the method comprising the steps of:
a first telecommunications network receiving a request for GBA services from one or more user equipment, UE;
a telecommunications roaming hub providing a communications interface between the first telecommunications network and a bootstrapping server function, BSF, within a network domain external to the first telecommunication network; and
the BSF providing GBA services to the one or more UE.

Optionally, the method may further comprise the steps of:
the telecommunications roaming hub routing a request and a response between the BSF and a home subscriber server, HSS, or a home location register, HLR; and
the BSF using the response to authenticate the one or more UE that requested the GBA services from the BSF. Therefore, the HSS or HLR within a core network can enable authentication of the UE by providing security vectors on demand in the usual way.

Preferably, the request may be routed based on an identifier of the one or more UE. This may be achieved using the B-TID or IMSI of the UE (or any other unique identifier), for example.

Optionally, the telecommunications roaming hub may be within a second telecommunications network different to the first telecommunications network. For example, the roaming hub may be available to a plurality of other telecommunication network operators.

Preferably, the GBA services provided to the one or more UE by the BSF may provide one or more session keys to the UE. The session keys may be provided indirectly from cryptographic material provided by the BSF to the UE so that the UE can derive the session or other keys from this cryptographic material. Similarly, the NAF may also derive similar keys of session keys for secure communications with the UE.

Preferably, the one or more session keys may be used by the UE to:
secure communications with an application function or a network application function, NAF; and/or
encrypt and/or sign data transferred between the UE the application function or NAF.

Optionally, the application function or the NAF may be within the network domain of the BSF and/or external to the network domain of the BSF.

Optionally, the one or more UE may be roaming. However, non-roaming UEs may also be provided with GBA services in this way.

According to a third aspect, there is provided a computer-readable medium comprising instructions which, when executed by a computer, cause the computer to carry out the steps of any previous method.

According to a fourth aspect, there is provided user equipment (UE, comprising:
a processor;
a UICC; and
computer readable medium comprising instructions which, when executed by the processor, cause the processor to carry out the steps of:
   issue a request to a bootstrapping server function, BSF, within a network domain via a telecommunications roaming hub withing a telecommunications network external to the network domain;
   receive from the BSF in response to the request cryptographic material, wherein the request is generated by the UICC and the cryptographic material of the response is authenticated using the UICC; and
   generate one or more keys or session keys from the authenticated cryptographic material. The instructions may be provided as a software development kit (SDK) deployed to the UE.

Optionally, the computer readable medium may further comprise instructions to cause the processor to carry out the steps of using the one or more keys or session keys to:
secure communications with an application function or a network application function, NAF, within the network domain of the BSF or external to the network domain of the BSF; and/or
encrypt and/or sign data transferred between the UE and the application function or NAF.

In accordance with a further aspect, there is provided a telecommunications system comprising:
a bootstrapping server function, BSF, within a network domain; and
an interface between the network domain and a telecommunications roaming hub within a telecommunications network external to the network domain, wherein the BSF is configured to provided generic bootstrapping architecture, GBA, services to user equipment, UE, operating within telecommunications networks external to the network domain.

The methods described above may be implemented as a computer program comprising program instructions to operate a computer. The computer program may be stored on a computer-readable medium, including a non-transitory computer-readable medium.

The computer system may include a processor or processors (e.g. local, virtual or cloud-based) such as a Central Processing Unit (CPU), and/or a single or a collection of Graphics Processing Units (GPUs). The processor may execute logic in the form of a software program. The computer system may include a memory including volatile and non-volatile storage medium. A computer-readable medium (CRM) may be included to store the logic or program instructions. For example, embodiments may include a non-transitory computer-readable medium (CRM) storing software comprising instructions executable by one or more computers which, upon such execution, cause the one or more computers to perform the disclosed methods. Non-transitory CRM may refer to a CRM that stores data for short periods or in the presence of power such as a memory device or Random Access Memory (RAM). For example, a non-transitory computer-readable medium may include storage components, such as, a hard disk (e.g., a magnetic disk, an optical disk, a magneto-optic disk, and/or a solid state disk), a compact disc (CD), a digital versatile disc (DVD), a floppy disk, a cartridge, and/or a magnetic tape. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram illustrating the components and interfaces defined in 3GPP Specification TS 33.220;
FIG. 2 shows a schematic diagram of a system for providing generic bootstrapping architecture services to one or more UEs;
FIG. 3 shows a schematic diagram of a computer system within the system of Figure 2;
FIG. 4 shows a flowchart of a method for providing generic bootstrapping architecture services to one or more UEs;
FIG. 5 shows a sequence diagram of a method for providing generic bootstrapping architecture services to one or more UEs; and
FIG. 6 shows a schematic diagram of further components of the system of Figure 2.

It should be noted that the figures are illustrated for simplicity and are not necessarily drawn to scale. Like features are provided with the same reference numerals.

### Detailed description of the preferred embodiments

The following describes a system and method for providing an operator agnostic implementation of a bootstrapping server function (BSF) that provides generic bootstrapping architecture (GBA) services to user equipment (UE). This extends functionality to multiple operator domains using a roaming hub, allowing inter-operator GBA support without requiring operator-to-operator interfaces.

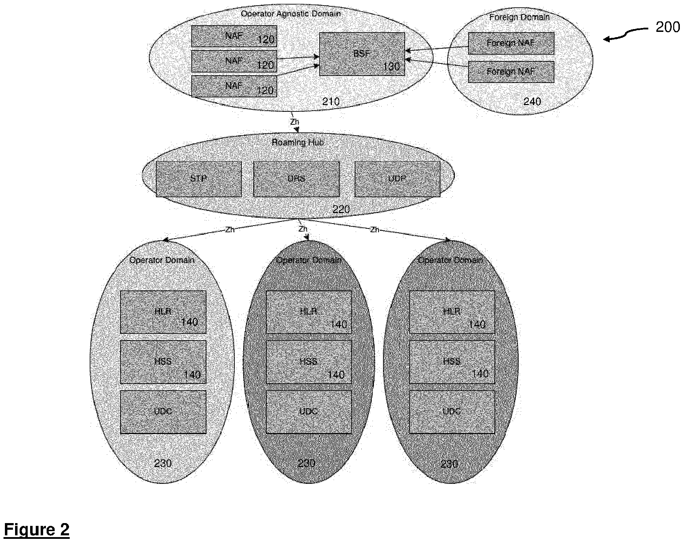

Figure 2 shows a schematic diagram of the system 200 that includes the BSF 130 within a network domain 210 (operator agnostic domain in this figure). A telecommunications roaming hub 220 has a communications interface (Zh) with the BSF 130 and also a plurality of communications interfaces (Zh) with one or more external telecommunications networks 230. Each external telecommunications network 230 has a home subscriber server (HSS) or home location register (HLR) 140. One or more application functions or network application functions (NAF) 120 can reside within the network domain of the BSF 210 or be located outside of this network domain (i.e., a foreign NAF).

The operator agnostic location of the BSF 130 (and NAF 120) can be used by any of the plurality of external telecommunications networks 230 by using one or more roaming hubs 220. Therefore, use of the roaming hub or hubs 220 is not limited to UEs 110 of only a single operator. One or more application functions, application servers, or NAFs 120 can communication with the same BSF 130. As described above, this system can work with decentralized NAF nodes (in same domain) or with foreign NAFs.

The BSF 130 can now have access to a wide range of operator networks 230 by using the roaming hub 220 and connecting to signal transfer points (STP), discovery reference signals (DRS) and security edge protection proxies (SEPP). The reference point Zh or interface used between the BSF 130 and the HLR/HSS 140 allows the BSF 130 to fetch required authentication information or vectors and GBA user security settings from the HLR/HSS 140. This may be based on an identifier of the UE 110.

As described in the GBA specification, Zh is an intra-operator domain interface. However, by introducing the roaming hub 220, a routing path can be established to a wider range of network operator HSS/HLR/UDP without requiring separate Zh interfaces for each separate network operator supported by an application function or NAF 120.

This inter-operator domain arrangement of Zh interfaces can use non-geographic GTs or geographic GTs (as long as a roaming relationship is established). A procedure is used to select the right GT based on AV request flow, source GT and Target network to have a roaming relationship. For example, if Operator A SIM is used, and an operator B GT is used, a request can present itself as an authentication request from Operator A SIM to roam onto operator B network. Therefore, this can function as outbound roaming for Operator A and inbound roaming for Operator B. Whilst this approach is used in the context of location updates, the present disclosure describes the enhanced benefits of extending this process to GBA.

This can apply to GBA_ME, GBA_U, GBA_Digest, GBA_Push or any other GBA functionality or services. Furthermore, this procedure can use Zn interfaces with operators that have no pathway for AV behind a roaming hub.

This eliminates the need for setting up specific Zn interfaces and complex interworking required to provide a full-mesh Zn setup. This in turn reduces costs and complexity to maintain an interworking GBA network across different operators. New services can be provided on top of GBA outside of operators, and enhances GBA to provide an operator agnostic mechanism that generates client and server side symmetric keys without needing to directly exchange them. This also provides an enabler for a model that allows operator SIMs to participate in GBA with little or no integration.

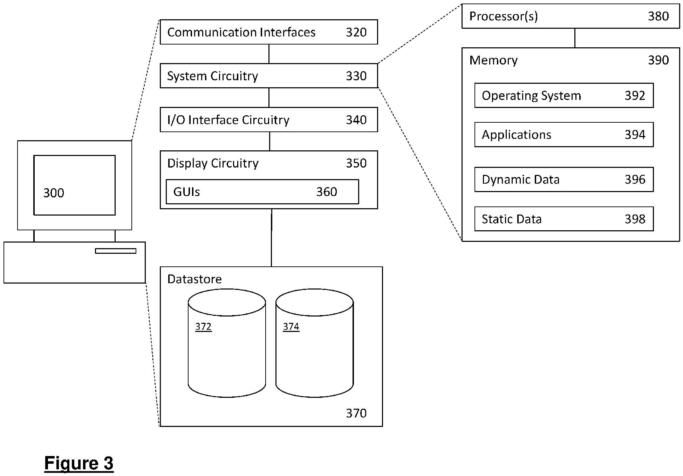

As shown in Figure 3, a computer system 300 providing this functionality includes a number of components including communication interfaces 320, system circuitry 330, input/output (I/O) circuitry 340, display circuitry and interfaces 350, and a datastore 370. The system circuitry 320 can include one or more processors or CPUs 380 and memory 390. The system circuitry 330 may include any combination of hardware, software, firmware, and/or other circuitry. The system circuitry 330 may be implemented, with one or more systems on a chip (SoC), application specific integrated circuits (ASIC), microprocessors, and/or analog and digital circuits.

The display circuitry (optional) may provide one or more graphical user interfaces (GUIs) 360 and the I/O interface circuitry 340 may include touch sensitive or non-touch displays, sound, voice or other recognition inputs, buttons, switches, speakers, sounders, and other user interface elements. The I/O interface circuitry 340 may include microphones, cameras, headset and microphone input /output connectors, Universal Serial Bus (USB) connectors, and SD or other memory card sockets. The I/O interface circuitry 340 may further include data media interfaces (e.g., a CD-ROM or DVD drive) and other bus and display interfaces.

The memory 390 may include volatile (RAM) or non-volatile memory (e.g., ROM or Flash memory). The memory may store the operating system 392 of the computer system 300, applications or software 394, dynamic data 396, and/or static data 398. The datastore or data source 370 may include one or more databases 372, 374 and/or a file store or file system, for example.

The method and system may be implemented in hardware, software, or a combination of hardware and software. The method and system may be implemented either as a server comprising a single computer system or as a distributed network of servers connected across a network. Any kind of computer system or other electronic apparatus may be adapted to carry out the described methods.

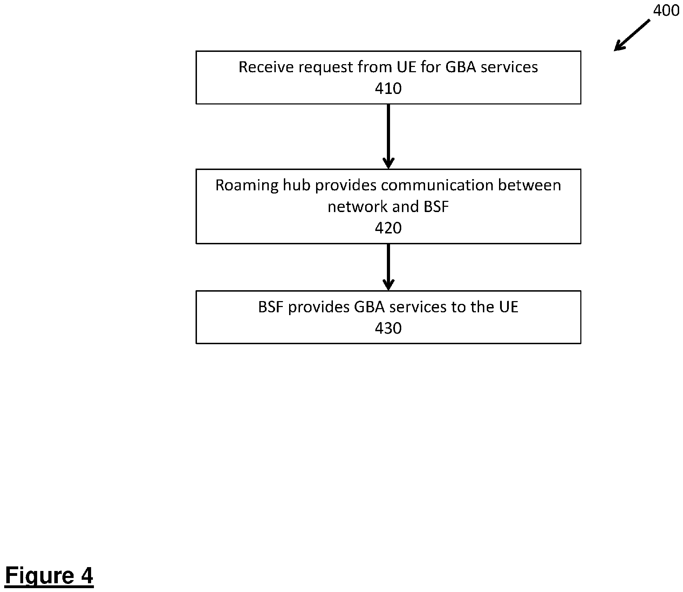

Figure 4 shows a flowchart of a method 400 for operating the system 200 described with reference to Figure 2. At step 410, a UE 110 requests GBA services (e.g., to enable access to an application function, server or NAF 120). The UE 110 is within a telecommunications network 230 and this request is received by this telecommunications network 230. At step 420, the roaming hub 220 provides a communications interface (e.g., Zh) between the telecommunications network 230 and the BSF 130 (not within the telecommunications network 230, although it may be located within another telecommunications network 230 or elsewhere). At step 430, the BSF 130 provides GBA services to the UE 110. The UE may be roaming onto the telecommunications network 230 or be a UE 110 having a SIM (UICC) of the telecommunications network 230. In the later case, the telecommunications network 230 does not need to have a BSF to provide GBA services to its own UEs 110 but can instead use the external BSF 130.

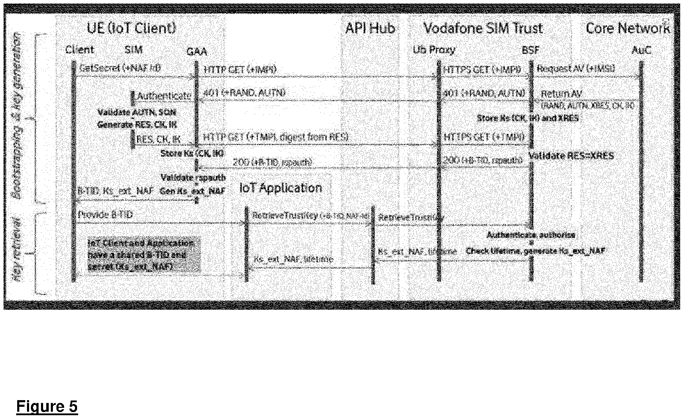

Figure 5 shows a sequence diagram illustrating details of a software development kit (SDK) used to provide functionality to achieve some of the method steps described with regards to Figure 4. The UE 110 contains a client application, a UICC (SIM) and the SDK (marked GAA or general authentication architecture in this figure). Communications between the UE 110 and the BSF 130 are implemented in this example through an application programming interface (API hub), which is part of the telecommunications roaming hub 220.

The UE 110 includes computer readable instructions forming the SDK. These instructions to carry out the steps of issuing a request to the BSF 130, which is within a network domain. The request is sent from the SDK (GAA in the example shown in Figure 5) via the telecommunications roaming hub (implemented by the API hub in this example) within a telecommunications network external to the network domain of the BSF 130. The SDK (GAA) receives cryptographic material (e.g., AUTN, SQN) from the BSF 130 in response to the request. The request is generated by the UICC (SIM) and the cryptographic material of the response is authenticated using the UICC (SIM). The UICC (SIM) generates one or more keys (e.g., Ks (CK, IK)) from the authenticated cryptographic material. The SDK (GAA) generates one or more session keys (e.g., Ks_ext_NAF) from the keys generated by the UICC (SIM). The BSF 103 also generates the same session keys, which can be used to secure communications and/or sign or encrypt messages between the UE 110 and the NAF 120 or other application server or function.

As part of this process, the BSF 110 interacts with the core network obtaining authentication vectors from the HSS/HLR 140 that can be used to authenticate the UE 110. Furthermore, the BSF 130 can carry out further checks and validation of the generated session keys (e.g., to check whether its lifetime has expired). In the example implementation shown in Figure 5, the BSF functionality is implemented using Vodafone's SIM Trust facilities. However, other implementations of GBA may be used. In the example implementation shown in Figure 5, the Ub Proxy protects the BSF 130 but is an optional component.

In summary, the SDK carries out GBA functions towards the BSF 130 (SIM Trust) across the internet. This makes use of native libraries to integrate with the SIM and performs GBA Bootstrap and challenge / response web calls towards the BSF 130 (SIM Trust).

The SDK provides the NAF key (SIM Trust key) for the application (client) on the UE 110 to use. The client may decide how the key is used (e.g., to encrypt data and/or to send to its home web application).

The SDK provides GBA services irrespective of operator SIM. Furthermore, these services are not specific to device type, as the UE 110 may be a smart phone, loT device or any device capable of connecting with a telecommunications network, provided that it has a UICC and at least basis processing capabilities. The SDK communicates with the roaming hub (Vodafone SIM Trust) 220 over the internet and does not require an operator APN.

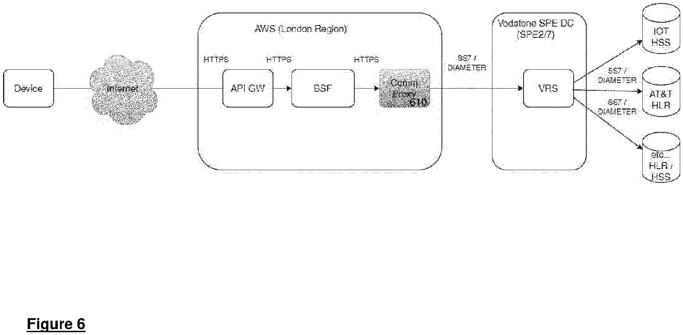

A communications proxy (CP) provides functionality to convert between protocols. For example, a CP can convert HTTPS (Web) requests to telecoms requests (e.g., SS7/Diameter). The CP can also provide an additional layer of security and/or can act as a load balancer. The CP can form part of the interface between the BSF 130 and the roaming hub 220. An example CP is G5V STP provided by Enghouse Networks, but other components may be used. An example implementation using the CP 610 is shown schematically in Figure 6, wherein the roaming hub 220 is shown as VRS (Vodafone Roaming Services). As shown in this example, three separate HLR and/or HSS are shown but any number may be used.

As used throughout, including in the claims, unless the context indicates otherwise, singular forms of the terms herein are to be construed as including the plural form and vice versa. For instance, unless the context indicates otherwise, a singular reference herein including in the claims, such as "a" or "an" (such as an ion multipole device) means "one or more" (for instance, one or more ion multipole device). Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B is true", or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, an element termed a "first" element may instead be termed a "second" element and an element termed a "second" element may instead be considered a "first" element.

Any steps described in this specification may be performed in any order or simultaneously unless stated or the context requires otherwise. Moreover, where a step is described as being performed after a step, this does not preclude intervening steps being performed.

It is also to be understood that, for any given component or embodiment described throughout, any of the possible candidates or alternatives listed for that component may generally be used individually or in combination with one another, unless implicitly or explicitly understood or stated otherwise. It will be understood that any list of such candidates or alternatives is merely illustrative, not limiting, unless implicitly or explicitly understood or stated otherwise.

Unless otherwise described, all technical and scientific terms used throughout have a meaning as is commonly understood by one of ordinary skill in the art to which the various embodiments described herein belongs.

As will be appreciated by the skilled person, details of the above embodiment may be varied without departing from the scope of the present invention, as defined by the appended claims.

For example, while only a single UE, a single BSF and particular numbers of NAFs are shown in the examples above, a plurality of UEs and BSF may be included (e.g., to load balance) and any number application functions, servers or NAFs may be used in the system and operate according to the described methods.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A telecommunications system comprising:
a bootstrapping server function, BSF, within a network domain;
a telecommunications roaming hub within a telecommunications network external to the network domain; and
a first communications interface between the BSF and the telecommunications roaming hub, wherein the BSF is configured to provided generic bootstrapping architecture, GBA, services to one or more user equipment, UE, operating within telecommunications networks external to the network domain.

2. The telecommunications system of claim 1, wherein the telecommunications roaming hub is configured to route a request and response between the BSF and a home subscriber server, HSS, or a home location register, HLR, the BSF further configured to use the response from the HSS or the HLR to authenticate the one or more UE that requests GBA services from the BSF.

3. The telecommunications system of claim 2, wherein the request is routed based on an identifier of the one or more UE.

4. The telecommunications system according to any previous claim, wherein the GBA services provided to the one or more UE by the BSF provide one or more session keys to the UE.

5. The telecommunications of claim 4 further comprising one or more application function or network application function, NAF, within the network domain of the BSF or external to the network domain of the BSF, the one or more application function or NAF configured to provide data services to the one or more UE using:
communications secured using the one or more session keys provided by the BSF using the GBA services; and/or
data encrypted and/or signed using the more or more session keys provided by the BSF using the GBA services.

6. A method for providing generic bootstrapping architecture, GBA, services to one or more user equipment, UE, the method comprising the steps of:
a first telecommunications network receiving a request for GBA services from one or more user equipment, UE;
a telecommunications roaming hub providing a communications interface between the first telecommunications network and a bootstrapping server function, BSF, within a network domain external to the first telecommunication network; and
the BSF providing GBA services to the one or more UE.

7. The method of claim 6 further comprising the steps of:
the telecommunications roaming hub routing a request and a response between the BSF and a home subscriber server, HSS, or a home location register, HLR; and
the BSF using the response to authenticate the one or more UE that requested the GBA services from the BSF.

8. The method of claim 7, wherein the request is routed based on an identifier of the one or more UE.

9. The method according to any of claims 6 to 8, wherein the telecommunications roaming hub is within a second telecommunications network different to the first telecommunications network.

10. The method of claim according to any of claims 6 to 9, wherein the GBA services provided to the one or more UE by the BSF provide one or more session keys to the UE.

11. The method of claim 10, wherein the one or more session keys are used by the UE to:
secure communications with an application function or a network application function, NAF; and/or
encrypt and/or sign data transferred between the UE the application function or NAF.

12. The method of claim 11, wherein the application function or the NAF is within the network domain of the BSF and/or external to the network domain of the BSF.

13. The method according to any previous claim, wherein the one or more UE is roaming.

14. A computer-readable medium comprising instructions which, when executed by a computer, cause the computer to carry out the steps of the method of any of claims 6 to 13.

15. A user equipment, UE, comprising:
a processor;
a UICC; and
computer readable medium comprising instructions which, when executed by the processor, cause the processor to carry out the steps of:
issue a request to a bootstrapping server function, BSF, within a network domain via a telecommunications roaming hub withing a telecommunications network external to the network domain;
receive from the BSF in response to the request cryptographic material, wherein the request is generated by the UICC and the cryptographic material of the response is authenticated using the UICC; and
generate one or more keys or session keys from the authenticated cryptographic material.

16. The UE of claim 15, wherein the computer readable medium further comprises instructions to cause the processor to carry out the steps of using the one or more keys or session keys to:
secure communications with an application function or a network application function, NAF, within the network domain of the BSF or external to the network domain of the BSF; and/or
encrypt and/or sign data transferred between the UE and the application function or NAF.
